(19) **Europäisches Patentamt**

**European Patent Office**

**Office européen des brevets**

(11) Veröffentlichungsnummer : **0 350 000 B1**

(12) # EUROPÄISCHE PATENTSCHRIFT

(45) Veröffentlichungstag der Patentschrift :
**02.01.92 Patentblatt 92/01**

(51) Int. Cl.⁵ : **B23K 37/00, B23K 9/04**

(21) Anmeldenummer : **89112250.9**

(22) Anmeldetag : **05.07.89**

(54) **Vorrichtung zum Auftragsschweissen der Schaufelspitzen von Turbinen- und Kompressor-Schaufeln.**

(30) Priorität : **08.07.88 DE 3823268**
**09.03.89 DE 3907624**

(43) Veröffentlichungstag der Anmeldung :
**10.01.90 Patentblatt 90/02**

(45) Bekanntmachung des Hinweises auf die
Patenterteilung :
**02.01.92 Patentblatt 92/01**

(84) Benannte Vertragsstaaten :
**BE CH DE FR GB LI LU NL SE**

(56) Entgegenhaltungen :
**DE-A- 3 430 114**
**US-A- 4 647 749**
**US-A- 4 709 156**
**US-A- 4 745 290**

(73) Patentinhaber : **MTU MAINTENANCE GmbH**
**Postfach 17 20 Münchner Strasse 31**
**W-3012 Langenhagen 7 (DE)**

(72) Erfinder : **Thiemann, Karl Georg**
**Matth. Grunwald Strasse 3**
**W-3050 Wunstorf 1 (DE)**
Erfinder : **Maurer, Thomas**
**Alleestrasse 5**
**W-3000 Hannover 1 (DE)**
Erfinder : **Schwehm, Günter**
**Am Silberberg 26**
**W-3016 Seelze 5 (DE)**

Jouve, 18, rue Saint-Denis, 75001 PARIS

## Beschreibung

Die Erfindung betrifft eine Vorrichtung zum Auftragsschweißen der Schaufelspitzen von Turbinen- und Kompressorschaufeln mittels eines CNC-Schweißautomaten mit einem Spanntisch zur Fixierung einer oder mehrerer Schaufeln und einem beweglichen Stativ. Eine Vorrichtung dieser Art ist aus der US-A-4647749 bekannt.

Die Schaufelspitzen von Turbinen- und Kompressorschaufeln unterliegen im Betrieb einem hohen Verschleiß. Dies ist insbesondere darauf zurückzuführen, daß die Schaufelspitzen an der Strömungskanalwandung anstreifen. Da dies andererseits zu hohen Spaltverlusten und somit einer Wirkungsgradreduzierung des Triebwerkes führen kann, ist es notwendig, in regelmäßigen Abständen die Schaufeln dahingehend zu untersuchen, ob der Schaufelspitzenverschleiß noch innerhalb der Toleranz liegt.

Bei Überschreitung der Toleranzgrenzen wird dann geprüft, ob die Schaufel noch reparaturfähig ist oder als Ausschuß anzusehen ist. Die Wiederherstellung reparaturfähiger Schaufeln geschieht bisher mittels manuellem Auftragsschweißen. Dazu wird die Schaufel auf ein für die gesamte Baureihe gleiches Maß abgeschliffen und in eine Spannvorrichtung eingespannt, wobei die Schaufelspitze nur wenige mm über die Spannvorrichtung hinausragt Anschließend wird von Hand eine Anzahl von Schweißlagen im Auftragsschweißverfahren auf die tragflügelprofilierte Wandungskante aufgetragen und in einem weiteren Arbeitsschritt die auftragsgeschweißte Schaufel auf die Sollmaße abgeschliffen.

Dieses Verfahren hat den Nachteil, daß das Auftragsschweißen sehr arbeitsintensiv ist und nur von geschulten Schweißern durchgeführt werden kann. Es sind Versuche gemacht worden, die Schweißung und Bearbeitung automatisiert durchführen. Hierzu wurde eine oder mehrere Schaufeln auf einem Schweißautomaten angeordnet und die schaufelspezifischen Parameter festgestellt und der Steuerung des Schweißautomaten eingegeben. Dabei sind jedoch an die Feststellung der Schaufelmaße hohe Anforderungen zu stellen. Insbesondere müssen Wandstärke, Höhenmaße und die Koordinaten sehr genau bestimmt werden, da der Schweißvorgang sonst zu Schäden an der Schaufel führen kann.

Es ist bisher nicht gelungen, ein wirksames Verfahren zur schnellen und genauen Messung der Schaufelparameter zu finden, daß mit ausreichender Genauigkeit und Fehlersicherheit arbeitet.

Hiervon ausgehend ist es Aufgabe der vorliegenden Erfindung, eine gattungsgemäße Vorrichtung zum Auftragsschweißen und Bearbeiten anzugeben, mittels der eine schnelle und genaue Messung der Schaufelparameter durchführbar ist. Diese Parameter sollen zur direkten Steuerung eines Schweißautomaten und Bearbeitungszentrums nutzbar sein.

Erfindungsgemäß wird die Aufgabe durch die im Patentanspruch 1 angegebenen Merkmale gelöst.

Der durch die Erfindung erzielbare Vorteil ist darin zu sehen, daß mittels des Triangulations-Balkenlasermeßgerätes eine sehr genaue und reproduzierbare berührungsfreie Messung der Schaufelspitzen möglich ist. Unter einem Triangulations-Balkenlasermeßgerät versteht der Fachmann eine Gerät, das mittels dreier Laserquellen ein zu vermessendes Objekt mit Hilfe des Triangulationsverfahren in ellen drei Raumrichtungen erfaßt. Mittels der Vorrichtung kann jede Schaufel einzeln vermessen werden, und die individuellen Daten zur individuellen Bearbeitung jeder Schaufel gemessen und gespeichert werden. Das Triangulations-Balkenlasermeßgerät ermöglicht ein einmaliges Überfahren der Schaufelspitze, wobei die Richtung des Lasermeßstrahles etwa parallel zur Schaufellängsachse bei massiven Turbinenschaufeln erfolgt. Bei innen hohlen Schaufeln folgt der Triangulations-Balkenlaser der äußeren Kontur der zu messenden Schaufel um sicherzustellen, daß die jeweilig korrekte Ist-Wandstärke erfaßt wird. Die erfindungsgemäße Vorrichtung ermöglicht somit eine individuelle Bearbeitung jeder Schaufel, wodurch das bisher notwendige Anschleifen auf ein Minimum reduziert wird.

Es ist nunmehr vielmehr möglich, die Schaufelspitzen lediglich zur Entfernung von oxid- und sonst schweißverhindernden Schichten zu bearbeiten, und je nach Verschleißgrad kann eine individuelle Anzahl von Schweißlagen auf der Schaufelspitze angebracht werden. Mittels der erfindungsgemäßen Vorrichtung läßt sich somit eine erheblich schnellere Schaufelreparatur durchführen.

Weiter von Vorteil ist, daß gegenüber dem manuellen Schweißen und Bearbeiten eine Verkürzung der Bearbeitungszeit etwa um den Faktor 4 bis 5 erzielbar ist, wodurch erhebliche Kosteneinsparungen möglich sind.

In vorteilhafter Weiterbildung der Erfindung sind das Triangulations-Balkenlasermeßgerät und die Schweißanlage an einem gemeinsamen bewegbaren Träger befestigt. Dies ermöglicht geringen baulichen Aufwand für die Bewegungserzeugung der Gesamtvorrichtung.

In alternativer Ausführung der Erfindung ist das Stativ des Triangulations-Balkenlasermeßgerätes an einer bewegbaren Traverse befestigt und die Schweißanlage (WIG oder Plasma) ist seperat beweglich an der Traverse befestigt. Zwar ist dies technisch komplizierter als die obige Ausführung, jedoch läßt sich hierdurch der Bearbeitungsvorgang zeitlich verkürzen. So kann gleichzeitig eine erste Gruppe von Schaufeln vermessen und eine zweite bearbeitet werden.

In vorteilhafter Weiterbildung ist das Triangulations-Balkenlasergerät nicht nur mit dem Schweißautomat sondern auch noch mit einem Bearbeitungszentrum verbunden, so daß die Fertigbearbeitung der Schaufeln exakt nach den gemessenen und abgespeicherten Ist-Daten der Schafuel vorgenommen werden kann. Es ist dabei möglich, daß jeweils eine einzelne Schaufel den Ablauf : Messen, Auftragsschweißen und Bearbeiten auf Ausgangskontur erhält. Dieser Ablauf einer einzelnen Schaufel kann beispielsweise im Bearbeitungszentrum mit einem CNC-gesteuerten Roboter vorgenommen werden, der die Schaufel an ein festinstalliertes Bandschleifgerät vorbeiführt und so den Abtrag bis auf die Ursprungskontur vornimmt.

Eine andere Möglichkeit der Einzelbearbeitung besteht darin, daß die Schaufel mit ihrer Fixier (Halte)-Vorrichtung vom Schweißautomat zum Bearbeitungszentrum transportiert und dort so in die Bearbeitungseinheit angedockt wird (Schnellverschluß), daß bei der Bearbeitung kein Kantenversatz entstehen kann. In diesem Fall läßt sich die Bearbeitung auch mit einer mehrachsigen (mindestens 4-achsig) CNC-gesteuerten Fräsmaschine vornehmen. Bei der Einzelbearbeitung ist eine Taktung der Schaufeln möglich.

Es ist allerdings auch möglich durch die Verwendung eines Schnellwechselsystems eine Gruppe von Turbinenschaufeln in eine oder zwei Reihen auf dem Spanntisch befestigt, sowohl auf der Schweißmaschine wie auch auf der Fräsmaschine zu bearbeiten. Vorzugsweise sind dies zwischen 4 und 12 Turbinenschaufeln. Auf diese Weise läßt sich die Rüstzeit der Maschinen gegenüber den Bearbeitungszeiten gering halten.

Eine weitere vorteilhafte Ausbildung der Erfindung sieht vor, daß der Spanntisch schwenkbar angeordnet ist. Dadurch läßt sich ein Teil der für die Bearbeitung erforderlichen Bewegungsfreiheitsgrade auf dem Spanntisch übertragen, und somit das Spiel des Laser und der Schweißvorrichtung minimieren.

In einer vorteilhaften Ausführung der Erfindung ist der Spanntisch rotierbar um eine Achse ausgeführt, die im wesentlichen senkrecht zur Lasermeßrichtung verläuft. Der Spanntisch weist eine erste Position zur Anbringung von Schaufeln auf, in einer zweiten durch Drehung des Spanntisches um 90° erreichbaren Position ist die Messung der Schaufeln mittels des Triangulations-Balkenlasermeßgerätes durchführbar. In einer dritten, um weitere 90° versetzten Position ist das Auftragsschweißen automatisiert durchführbar, und in einer vierten um weitere 90° versetzten Position sind die bearbeiteten Schaufeln entfernbar. Zu diesem Zweck sind die Schaufeln am Umfang des vorzugsweise runden Spanntisches befestigt, und durch Rotation des Spanntisches um jeweils 90° von einer in die nächste Bearbeitungsposition bringbar. Dabei sind vorzugsweise vier oder ein Vielfaches davon an Schaufeln auf dem Spanntisch befestigt. Das Ein- und Ausspannen der Schaufeln vor und nach der Bearbeitung kann ebenfalls automatisiert durchgeführt werden, beispielsweise mittels eines Robotergreifarmes.

Die Erfindung wird nachfolgend anhand der beigefügten Zeichnung näher erläutert. Dabei zeigt,

Fig. 1      eine schematische Ansicht der erfindungsgemäßen Vorrichtung,
Fig. 2      eine schematische Ansicht einer alternativen Anordnung,
Fig. 3a     eine schematische Darstellung des Abtastvorganges an einer Kompressorschaufel,
Fig. 3b     eine schematische Darstellung des Abtastvorganges an einer innen hohlen Turbinenschaufel.

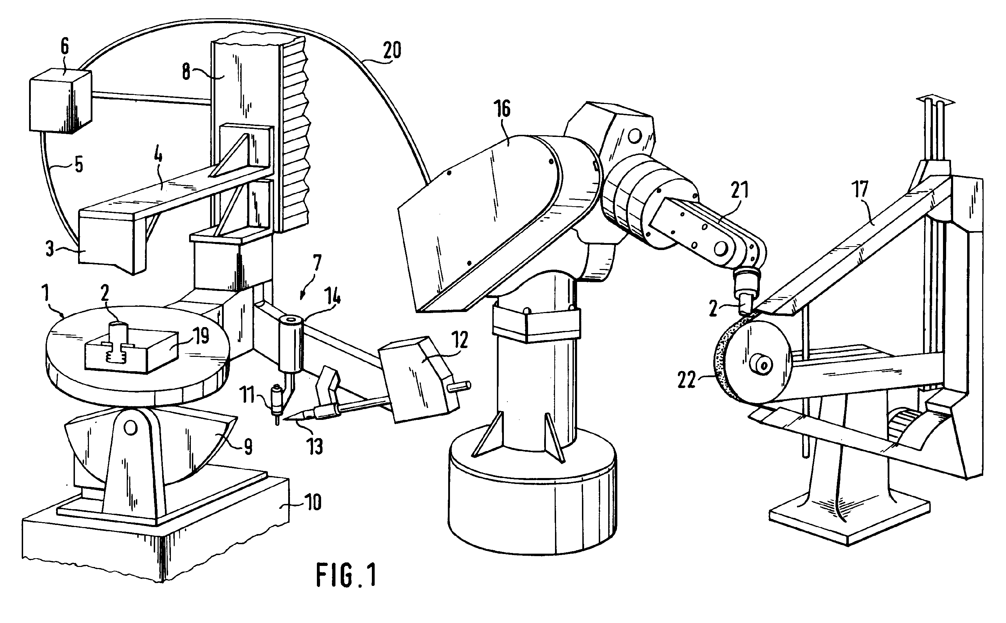

In Fig. 1 ist auf der linken Seite der Abbildung die Kombination der erfindungsgemäßen Meßvorrichtung 3 zum Auftragsschweißen gezeigt, die im wesentlichen aus einem Spanntisch 1, der mittels einer Schwenkvorrichtung 9 an einem Maschinengestell 10 angebracht ist. Eine Traverse 8 ist über nicht dargestellte Vorrichtungen in mehreren, vorzugsweise drei Translationsfreiheitsgraden bewegbar. An der Traverse 8 ist über ein Stativ 4 ein Triangulations-Balkenlasermeßgerät 3 angebracht, das zur Abtastung der auf der Haltevorrichtung 19 befestigten Schaufel 2 ausgerichtet ist. Das Triangulations-Balkenlasermeßgerät 3 ist über eine Verbindungsleitung 5 mit einem übergeordneten Rechner 6 verbunden, in den die gemessenen Daten zwecks weiterer Bearbeitung und Nutzung abgelegt werden. Mit den bearbeiteten Daten werden sowohl die Achsen des Schweißautomates gesteuert wie auch die Parameter für die Schweißanlage 7 vorgegeben. Die Daten werden im Rechner 6 so aufbereitet, daß eine Zuordnung von festzulegenden Schweißparametern in Abhängigkeit zu gemessenen Werkstückdicken und dem vorgegebenen Werkstoff erfolgen kann. Die Zuordnung erfolgt so, daß sichergestellt wird, daß einerseits eine 100%ige Benetzung des zu schweißenden Bereiches erfolgt, andererseits das Schweißgut nicht unnötig weit über die Seitenflächen der Schaufeln 2 übersteht.

In einem anderen Bereich des Rechenspeichers sind die Schweißparameter der zu schweißenden Turbinenschaufel 2 in Abhängigkeit von der jeweiligen Werkstückdicke abgelegt. Der Rechner ist ferner in der Lage die jeweiligen richtigen Schweißparameter der aus den Meßdaten ermittelten Werkstückdicke zuzuordnen und an den Schweißautomat zu übermitteln, der nach den vorgegebenen Parametern arbeitet.

Ferner ist der Rechner 6 in der Lage bei Einzelbearbeitung von Turbinenschaufeln 2 die Steuerung der Einzelteile innerhalb des Materialflusses zu übernehmen und so eine getakte Bearbeitung zu ermöglichen.

Die Schweißanlage besteht aus einem Brennerkopf 11, dem über eine Kaltdrahtzufuhrvorrichtung 12 der Schweißdraht 13 zugeführt wird. Der Brennerkopf 14 ist über mehrere Gelenke schwenk- und drehbar an der Traverse 8 angebracht. Der Rechner 6 steuert über die Verbindungsleitung 20 einen Roboter 16, an dessen Arm 21 eine Schaufel 2 befestigt ist. Der Roboter 16 wird dabei so gesteuert, daß das auf der Schaufel 2 angebrachte Schweißgut auf die Sollwerte abgeschliffen werden. Dies geschieht mittels des Schleifbandes 22, das an einem Bandschleifgerät 17 angebracht ist. Die Lage des Roboters 16 zum Bandschleifgerät 17 ist im Rechner 6 eingespeichert, so daß aufgrund der ebenfalls im Rechner 6 gespeicherten Daten der Schaufel 2 eine Abschleifung der aufgetragenen Schweißlagen auf die erforderlichen Sollwerte erfolgen kann.

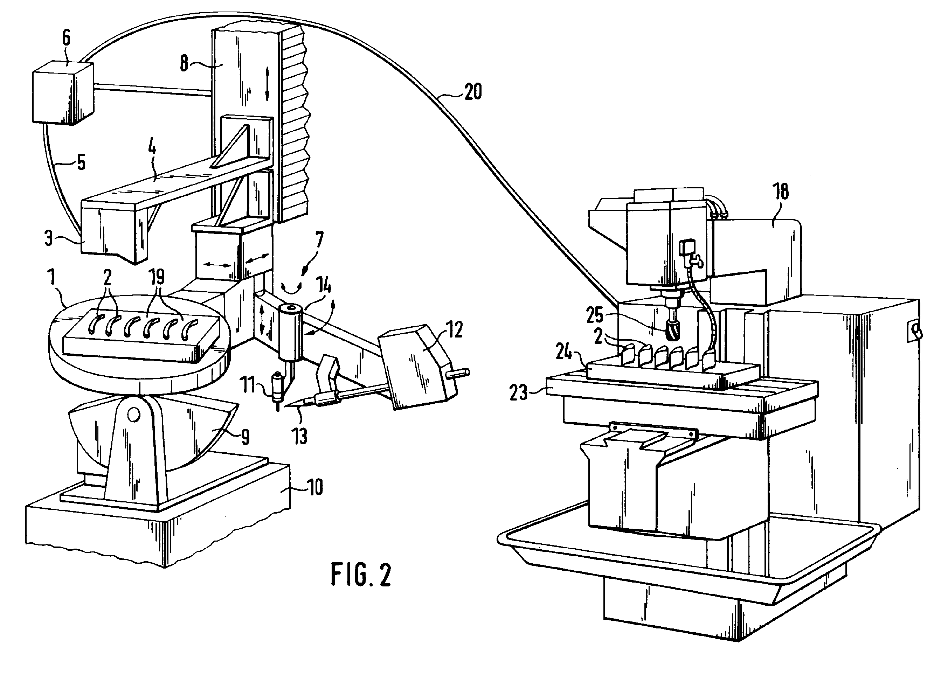

In Fig. 2 ist ebenfalls auf der linken Seite der Abbildung die Kombination der erfindungsgemäßen Verbindung des Triangulations-Balkenlasermeßgerätes 3 mit dem CNC-gesteuerten Schweißautomaten identisch mit der Fig. 1 dargestellt. Ein Unterschied zwischen Fig. 1 und Fig. 2 besteht darin, daß die Schaufeln 2 nicht einzeln, sondern gleich zu mehreren nacheinander gemessen und dann auftragsgeschweißt werden. Die Beschreibung des Ablaufes ist bis zur Bearbeitung der Turbinenschaufeln 2 daher identisch mit der von Fig. 1. Bei dieser Ausführung der Erfindung ist der Rechner 6 über die Verbindungsleitung 20 mit einer CNC-gesteuerten Fräsmaschine 18 verbunden, auf deren Frässpanntisch 23 eine Haltevorrichtung 24 für sechs Schaufeln 2 befestigt ist. Die Abarbeitung der Schaufeln 2 auf Endmaß erfolgt dabei über den Fräser 25 mittels der vom Rechner 6 bereitgestellten Daten. Der Fräser 25 ist dabei mindestens in vier Achsen bewegbar.

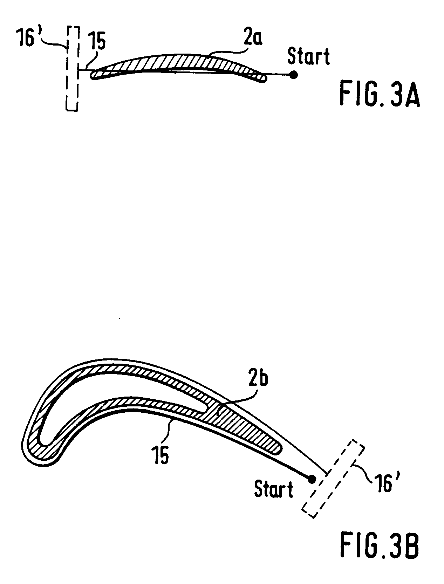

In Fig. 3a ist schematisch ein Querschnitt einer Kompressorschaufel 2a gezeigt, die entlang der Linie mit einem Durchgang von Triangulations-Balkenlasermeßgerät 3 vermessen wird. Bei innen hohlen Turbinenschaufeln 2b, siehe schematische Darstellung in Fig. 3b, erfolgt die Vermessung der Turbinenschaufel parallel zur Außenkontur entlang einer vorher eingegebenen Ideal- oder Masterkontur des zu messenden Schaufeltyps um Falschinterpretationen der Wandstärke an der Eintrittskante der Turbinenschaufel 2b zu unterbinden. Schematisch ist ferner mittels der gestrichelten Linie 16 der Bereich angedeutet, der gleichzeitig mittels des Triangulations-Balkenlasermeßgerätes 3 abtastbar ist.

## Patentansprüche

1. Vorrichtung zum Auftragsschweißen und Bearbeiten der Schaufelspitzen von Turbinen- und Kompressor-Schaufeln (TKS) mittels eines CNC-Schweißautomaten mit einem Spanntisch (1) zur Fixierung einer oder mehrerer Schaufeln (2) und einem beweglichen Stativ (4), dadurch gekennzeichnet, daß am beweglichen Stativ (4) ein Triangulations-Balkenlasermeßgerät zur Abtastung der Schaufelspitzengeometrie einer jeden Schaufel angeordnet ist und das Triangulations-Balkenlasermeßgerät (3) eine Verbindungsleitung (5) zu einem übergeordneten Rechner (6) aufweist, wobei der Rechner (6) sowohl zur Datenspeicherung der übermittelten Daten der Schaufelspitzengeometrie, als auch zur Steuerung und Koordinierung des CNC-Schweißautomaten einer Schweißanlage (7) eingesetzt wird.

2. Vorrichtung nach Anspruch 1, dadurch gekennzeichnet, daß das Triangulations-Balkenlasermeßgerät (3) und die Schweißanlage (7) an einem gemeinsamen, bewegbaren Träger befestigt sind.

3. Vorrichtung nach Anspruch 1, dadurch gekennzeichnet, daß das Stativ (4) des Triangulations-Balkenlasermeßgeräts (3) an einer bewegbaren Traverse (8) befestigt ist, und die Schweißanlage (7) separat beweglich an der Traverse (8) befestigt ist.

4. Vorrichtung nach Anspruch 1, dadurch gekennzeichnet, daß das Stativ (4) mit zwei seitlich angebrachten Triangulations-Balkenlasermeßgeräte (3) an einer bewegbaren Traverse (8) befestigt ist, und die Schweißanlage (7) separat beweglich an der Traverse (8) befestigt ist.

5. Vorrichtung nach Anspruch 1, dadurch gekennzeichnet, daß der Rechner (6) neben dem CNC-Schweißautomaten ein CNC-gesteuertes Bearbeitungszentrum (16, 17, 18) steuert.

6. Vorrichtung nach Anspruch 5, dadurch gekennzeichnet, daß die Bearbeitung der einzelnen Schaufeln (2) nach dem Auftragsschweißen durch einen CNC-gesteuerten Roboter (16) an einem laufenden Schleifband (17) erfolgt.

7. Vorrichtung nach Anspruch 5, dadurch gekennzeichnet, daß die Bearbeitung der aufgeschweißten Schaufeln (2), die in einer oder zwei Reihen auf den Spanntisch (1) befestigt sind, durch eine CNC-gesteuerte Fräsmaschine (18) erfolgt.

8. Vorrichtung nach Anspruch 5, dadurch gekennzeichnet, daß die Bearbeitung der aufgeschweißten Schaufel (2), die in einer Einzelvorrichtung auf dem Spanntisch (1) befestigt ist, durch eine mehrachsige CNC-Fräsmaschine (18) erfolgt.

9. Vorrichtung nach einem der vorhergehenden Ansprüche, dadurch gekennzeichnet, daß die Schaufeln (2) einzeln auf dem Spanntisch (1) angebracht sind.

10. Vorrichtung nach einem der vorhergehenden Ansprüche, dadurch gekennzeichnet, daß eine Gruppe von Schaufeln (2) in einer oder mehreren, vorzugsweise zwei Reihen auf dem Spanntisch (1) zum Schweißen und Bearbeiten angebracht sind.

11. Vorrichtung nach einem der vorhergehenden Ansprüche, dadurch gekennzeichnet, daß der Spanntisch (1) schwenkbar angeordnet ist.

12. Vorrichtung nach einem der Ansprüche 1 bis 4, dadurch gekennzeichnet, daß der Spanntisch (1) rotierbar um eine Achse ausgeführt ist, die im wesentlichen parallel zur Lasermeßrichtung verläuft und eine erste Position zur Anbringung von Schaufeln (2) aufweist, eine zweite bei Drehung des Spanntisches (1) um 90° erreichbare Position aufweist, bei der die Messung mittels des Triangulations-Balkenlasermeßgerätes (3) durchführbar ist, eine dritte um weitere 90° versetzte Position aufweist, bei der das Auftragsschweißen durchführbar ist, und eine vierte um weitere 90° versetzte Position aufweist, bei der die aufgeschweißten Schaufeln (2) entfernbar sind.

13. Vorrichtung nach einem der vorhergehenden Ansprüche, dadurch gekennzeichnet, daß die Haltevorrichtung (19), die auf dem Spanntisch (1) befestigt wird eine Anzahl Durchbrüche aufweist, die der Profilkontur der Schaufeln (2) im Bereich der Schaufelspitzen entsprechen und zwischen 1 und 10 mm über die Haltevorrichtung (19) hinausragen.

14. Vorrichtung nach Anspruch 1, dadurch gekennzeichnet, daß die Speicherkapazität des übergeordneten Rechners (6) so groß ist, daß sämtliche gemessenen Daten in einem dafür reservierten Speicher aufgenommen und abgelegt werden, wobei die gemessenen Daten in einem zweiten Schritt abgerufen und so bearbeitet werden, daß mit ihnen die Bewegungsachsen der Schweißautomaten (7) und die Bewegungsachsen des Bearbeitungszentrums (16, 17, 18) danach gesteuert werden können.

## Claims

1. Device for the build-up welding and machining of turbine blade tips and compressor blades (TKS) by means a CNC automatic welder with a clamping table (1) for securing one or more blades (2) and a movable stand (4), characterised in that there is disposed on the movable stand (4) a triangulation laser beam measuring apparatus for scanning the blade tip geometry of each blade, and the triangulation laser beam measuring apparatus (3) comprises a connection line (5) to a higher-order computer (6), the computer (6) being used both to store the transmitted data relating to the blade tip geometry as well as to control and coordinate the CNC automatic welder of a welding apparatus (7).

2. Device according to Claim 1, characterised in that the triangulation laser beam measuring apparatus (3) and the welding apparatus (7) are secured on a common movable carrier.

3. Device according to Claim 1, characterised in that the stand (4) of the triangulation laser beam measuring apparatus (3) is secured on a movable cross arm (8) and the welding device (7) is secured in a separately movable manner on the cross arm (8).

4. Device according to Claim 1, characterised in that the stand (4) is secured with two laterally mounted triangulation laser beam measuring apparatus (3) on a movable cross arm (8), and the welding apparatus (7) is secured in a separately movable manner on the cross arm (8).

5. Device according to Claim 1, characterised in that the computer (6) controls a CNC controlled machining centre (16, 17, 18) in addition to the CNC automatic welder.

6. Device according to Claim 5, characterised in that the individual bladed (2) are machined after the build-up welding process by a CNC controlled robot (16) on a continuous grinding belt (17).

7. Device according to Claim 5, characterised in that the build-up welded blades (2), which are secured in one or two rows on the clamping table (1), are machined by a CNC controlled milling machine (18).

8. Device according to Claim 5, characterised in that the build-up welded blades (2), which are secured in an individual device on the clamping table (1), are machined by a multiaxis CNC milling machine.

9. Device according to any one of the preceding claims, characterised in that the blades (2) are mounted separately on the clamping table (1).

10. Device according to any one of the preceding claims, characterised in that a group of blades (2) is mounted in one or more, preferably two, rows on the clamping table (1) for welding and machining.

11. Device according to any one of the preceding claims, characterised in that the clamping table (1) is pivotably disposed.

12. Device according to any one of Claims 1 to 4, characterised in that the clamping table (1) is designed so as to be rotatable about an axis running essentially parallel to the laser measuring direction and comprises a first position for mounting blades (2), a second position, which can be attained by rotating the clamping table (1) through 90° and in which measuring can be carried out by means of the triangulation laser beam measuring apparatus (3), a third position which is offset by a further 90° and in which the build-up welding process can be performed, and a fourth position which is offset by a further 90° and in the case of which the build-up welded blades (2) can be removed.

13. Device according to any one of the preceding claims, characterised in that the holding device (19), which is secured on the clamping table (1), comprises a number of apertures which correspond to the profiled contour of the blades (2) in the vicinity of the blade tips and project between 1 and 10 mm over the holding device (19).

14. Device according to Claim 1, characterised in that the storage capacity of the higher-order computer (6) is so large that all measured data are recorded and stored in a memory reserved therefor, the measured data being retrieved and processed in a second step in such a way that by means thereof the movement axes of the automatic welder (7) and the movement axes of the machining centre (16, 17, 18) can be controlled according thereto.

## Revendications

1. Dispositif pour le rechargement par soudage et l'usinage des extrémités d'aubes de turbines et de compresseurs (TKS) au moyen d'un automate de soudage commandé numériquement par calculateur avec une table de serrage (1) pour la fixation d'une ou plusieurs aubes (2) et un support mobile (4), dispositif caractérisé en ce que sur le support mobile (4) est disposé un appareil de mesure laser à barres de triangulation pour l'exploration de la géométrie de l'extrémité de chaque aube, tandis que l'appareil de mesure laser à barres de triangulation (3) comporte une liaison (5) vers un calculateur (6) placé au-dessus, et en ce que ce calculateur (6) est mis en oeuvre aussi bien pour la mémorisation des données qui lui sont transmises concernant la géométrie des extrémités d'aubes, qu'également pour la commande et la coordination de l'automate de soudage commandé numériquement par calculateur d'une installation de soudage (7).

2. Dispositif selon la revendication 1, caractérisé en ce que l'appareil de mesure laser à barres de triangulation (3) et l'installation de soudage (7) sont fixés sur un support mobile commun.

3. Dispositif selon la revendication 1, caractérisé en ce que le support (4) de l'appareil de mesure laser à barres de triangulation (3) est fixé à une traverse mobile (8), tandis que l'installation de soudage (7), mobile séparément, est fixée à la traverse (8).

4. Dispositif selon la revendication 1, caractérisé en ce que le support (4) avec deux appareils de mesure laser à barres de triangulation (3) disposés latéralement, est fixé à une traverse mobile (8), tandis que l'installation de soudage (7), mobile séparément, est fixée à la traverse (8).

5. Dispositif selon la revendication 1, caractérisé en ce que le calculateur (6) commande en plus de l'automate de soudage commandé numériquement par calculateur, un centre d'usinage commandé numériquement par calculateur (16, 17, 18).

6. Dispositif selon la revendication 5, caractérisé en ce que l'usinage des différentes aubes (2) après le rechargement par soudage s'effectue grâce à un robot (16) commandé numériquement par calculateur sur une bande de rectification (17) animée d'un mouvement continu.

7. Dispositif selon la revendication 5, caractérisé en ce que l'usinage des aubes (2) rechargées par soudage et qui sont fixées en une ou deux rangées sur la table de serrage (1) s'effectue grâce à une machine à fraiser (18) commandée numériquement par calculateur.

8. Dispositif selon la revendication 5, caractérisé en ce que l'usinage de l'aube (2) rechargée par soudage et qui est fixée dans un dispositif individuel sur la table de serrage (1), s'effectue grâce à une machine à fraiser à plusieurs axes (18) commandée numériquement par calculateur.

9. Dispositif selon une des précédentes revendications caractérisé en ce que les aubes (2) sont disposées individuellement sur la table de serrage (1).

10. Dispositif selon une des précédentes revendications, caractérisé en ce qu'un groupe d'aubes (2) est disposé en une ou plusieurs rangées, de préférence en deux rangées sur la table de serrage (1) pour le soudage et l'usinage.

11. Dispositif selon une des précédentes revendications, caractérisé en ce que la table de serrage (1) est susceptible de pivoter

12. Dispositif selon une des revendications 1 à 4, caractérisé en ce que la table de serrage (1) est réalisée de façon à pouvoir tourner autour d'un axe qui est essentiellement parallèle à la direction de mesure laser, et cette table comporte une première position pour la mise en place des aubes (2), une seconde position obtenue en faisant tourner la table de serrage (1) de 90° et dans laquelle peut être exécutée la mesure au moyen du dispositif de mesure laser à barres de triangulation 3, une troisième position décalée à nouveau de 90°, dans laquelle est réalisé le soudage de rechargement et une quatrième position décalée à nouveau de 90° dans laquelle les aubes (2) rechargées par soudage peuvent être enlevées.

13. Dispositif selon une des revendications précédentes, caractérisé en ce que le dispositif de maintien (19) qui est fixé sur la table de serrage (1) comporte un certain nombre d'ajours qui correspondent au contour du profil des aubes (2) au voisinage de l'extrémité des aubes et qui font saillie de 1 à 10 mm au-dessus du dispositif de maintien (19).

14. Dispositif selon la revendication 1, caractérisé en ce que la capacité de mémorisation du calculateur (6) placé au-dessus est suffisamment importante pour que l'ensemble des données mesurées soit pris en charge et déposé dans une mémoire réservée à cet effet, tandis que ces données mesurées sont, dans une seconde étape, appelées et traitées de façon que grâce à elles, les axes de déplacement de l'automate de soudage (7) et les axes de déplacement du centre d'usinage (16, 17, 18) puissent être commandés en conséquence.

FIG.1

FIG. 2

FIG. 3A

FIG.3B